# FASCICULE DE BREVET EUROPEEN

(11) **EP 3 030 810 B1**
(45) Date de publication et mention de la délivrance du brevet: **04.10.2017**
(21) Numéro de dépôt: 14780589.9
(22) Date de dépôt: 06.08.2014
(51) Int. Cl.: F16J 15/02, F16L 17/025, F16L 21/03, F16L 37/02

(54) **JOINT EN T, UTILISATION D'UN TEL JOINT ET CONNECTEUR RAPIDE MUNI D'UN TEL JOINT**
T-VERBINDUNG, VERWENDUNG SOLCH EINER VERBINDUNG UND SCHNELLKUPPLUNG MIT SOLCH EINER VERBINDUNG
T-JOINT, USE OF SUCH A JOINT AND QUICK CONNECTOR PROVIDED WITH SUCH A JOINT

(30) Priorité: 07.08.2013 FR 1357860
(43) Date de publication de la demande: 15.06.2016
(73) Titulaire: LE JOINT FRANCAIS SNC, 75008 Paris (FR)
(72) Inventeur: PRADELLE, Sébastien, 68165 Mannheim (FR)
(74) Mandataire: Gevers & Orès
(86) Numéro de dépôt international: PCT/IB2014/063748
(87) Numéro de publication internationale: WO 2015/019306

(56) Documents cités:
- EP-A1- 0 651 197
- EP-A1- 0 713 992
- EP-A1- 1 967 773
- WO-A1-01/51841
- JP-A- 2011 117 582
- US-A- 4 014 556
- US-A1- 2008 191 466

## Description

La présente invention concerne un joint en T, une utilisation d'un tel joint et un connecteur rapide muni d'un tel joint.

Un connecteur de conduite de fluide sert à connecter de manière étanche une première conduite de fluide et une deuxième conduite de fluide.

Dans de nombreux secteurs industriels et, notamment dans le secteur automobile, les connecteurs rapides se multiplient de part leur facilité d'utilisation. Néanmoins, les connecteurs rapides connus nécessitent, le développement de solutions d'étanchéité influençant peu les efforts d'emboitement de ces connecteurs. Ces exigences concernent l'ensemble des fluides comme par exemple le carburant (essence, diesel, biocarburant), le liquide de refroidissement, le liquide de frein, l'urée, l'air, l'huile ou les gaz d'échappement. Certaines applications sont plus critiques de par la dimension des connecteurs, comme les connecteurs de conduits d'air principalement utilisés pour les moteurs diesel ou les connecteurs de conduits d'eau pour poids lourds par exemple.

En effet, plus la dimension du diamètre de passage du fluide est importante plus la dimension du joint augmente et plus les efforts d'emboîtement sont importants.

Afin de limiter les coûts de conception et de fabrication des connecteurs rapides et de leur solution d'étanchéité, une solution consiste à utiliser des éléments déjà connus et normés pour former tout ou partie de ces connecteurs.

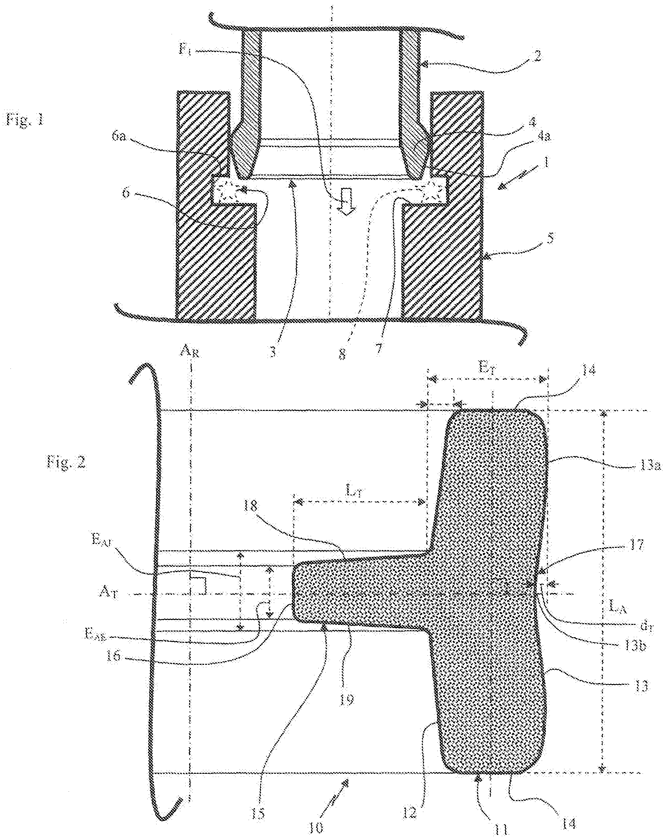

Une solution envisagée est d'utiliser des tubes fabriqués selon la norme DIN 3021-3 pour fabriquer la partie mâle d'un connecteur rapide. Le connecteur ainsi constitué présentera la structure illustrée à la figure 1.

Le connecteur de conduite de fluide 1 comporte une partie tubulaire mâle 2 présentant une extrémité 3 munie d'un bourrelet annulaire 4 de couplage présentant une surface chanfreinée périphérique 4a et une partie tubulaire femelle 5 présentant une gorge annulaire 6 destinée à recevoir au moins partiellement le bourrelet annulaire 4 de couplage. La gorge annulaire 6 est prolongée par une butée annulaire 7 destinée à bloquer axialement l'extrémité 3 de la partie mâle 2.

Un joint 8, représenté symboliquement par une étoile en pointillée sur la figure, est prévu dans la gorge annulaire pour assurer un contact d'étanchéité périphérique entre la surface chanfreinée périphérique du bourrelet et la gorge.

Il n'existe actuellement aucun joint d'étanchéité capable d'assurer l'étanchéité de tels connecteurs.

La présente invention vise à proposer une solution d'étanchéité simple efficace et facile à mettre en oeuvre pour un tel connecteur rapide.

Un joint torique présente généralement un faible coût. Cependant, l'utilisation d'un joint torique n'est pas envisageable car il serait nécessaire d'utiliser un diamètre de tore très important pour compenser les jeux axiaux, ce qui conduit à un encombrement rédhibitoire, et, au final, un coût supérieur du joint. Les efforts d'emboîtement seraient également trop élevés du fait des tolérances élevées à compenser (à la fois radiale et axiale).

Les joints à lèvres classiques ou profilés présentent un coût de fabrication généralement élevé et nécessitent un logement complexe. Par ailleurs, la finesse de la lèvre le rend plus sensible au vieillissement thermique et au fluage que les solutions précédentes.

Les joints à lèvre classiques ou profilés aussi bien que les joints en Y ne sont pas, de par leur design, adaptés à une étanchéité réalisée sur un chanfrein 4a comme celui de la pièce tubulaire mâle 2. Ces designs de joints ne permettent pas de compenser des tolérances axiales élevées.

L'invention vise à proposer un joint d'étanchéité pour connecteur rapide comprenant une partie mâle conforme à la norme DIN 3021-3, assurant une étanchéité dans une gamme de pression de fluide faible à moyenne allant jusqu'à 2 MPa malgré une tolérance d'emboitement axiale de 0 mm, allant jusqu'à 2,5 à 3 mm, une tolérance d'emboitement radial jusqu'à 0,8 mm au rayon, tout en présentant des efforts d'emboîtement faibles situés préférentiellement entre 30 et 80 N pour des diamètres de passage de dimension comprises entre 30 mm et 120 mm.

Le joint selon l'invention est économique à fabriquer en grande série, apte à être utilisé sans modification des dimensions de la gorge des connecteurs pour ne pas engendrer de coût de modification des pièces existantes, et capable d'assurer l'étanchéité requise avec des tolérances d'emboitement axiales et radiales élevées. Dans un mode de réalisation avantageux, il est dépourvu de sens de montage, ce qui lui permet d'être très facilement installé, y compris automatiquement par des robots de montage.

Plus précisément, la présente invention a pour objet un joint annulaire suivant la revendication 1, en particulier un joint annulaire en matériau déformable élastiquement pour connecteur rapide de conduites de fluide, présentant un axe de révolution et un axe transversal, et comprenant, en section axiale longitudinale une forme générale en «T», présentant en position de repos :
- une jambe périphérique s'étendant parallèlement par rapport à l'axe de révolution et présentant une face intérieure, tournée vers l'axe de révolution, une face extérieure périphérique en vis-à-vis, et deux faces latérales reliant les faces intérieure et extérieure,
- une barre sensiblement perpendiculaire à la jambe s'étendant parallèlement à l'axe transversal depuis la face intérieure de la jambe vers l'axe de révolution, dans lequel la face extérieure de la jambe est concave.

Selon des modes de réalisation préférées:
- la jambe peut présenter une longueur axiale, mesurée entre les deux faces latérales perpendiculairement à l'axe transversal, la barre s'étendant transversalement au milieu de la longueur axiale de la jambe ;
- la jambe peut présenter une longueur axiale, mesurée entre les deux faces latérales perpendiculairement à l'axe transversal, la barre s'étendant transversalement entre le milieu de la longueur axiale de la jambe et une face latérale ;
- la jambe peut présenter une épaisseur transversale, mesurée entre la face intérieure et la face extérieure perpendiculairement à l'axe de révolution, et la barre présente une longueur transversale mesurée entre la jambe et une extrémité libre de la barre perpendiculairement à l'axe transversal, le rapport entre l'épaisseur transversale de la jambe et la longueur transversale de la barre étant compris entre 0,5 et 1, avantageusement entre 0,7 et 0,9 ;
- le rapport entre la longueur axiales de la jambe et la longueur transversale de la barre peut être compris entre 2 et 3,5, avantageusement entre 2,5 et 3 ;
- la barre peut présenter une épaisseur axiale qui diminue linéairement depuis la jambe jusqu'à l'extrémité libre de la barre;
- la barre peut présenter une épaisseur axiale qui augmente linéairement depuis la jambe jusqu'à l'extrémité libre de la barre ;
- la barre peut présenter une épaisseur axiale constante depuis la jambe jusqu'à l'extrémité libre de la barre ;
- la barre peut présenter une zone de flexion préférentielle présentant une épaisseur axiale localement inférieure à l'épaisseur axiale du reste de la barre ;
- la barre peut être symétrique par rapport à l'axe transversal ;
- la barre peut être dissymétrique par rapport à l'axe transversal ;
- le rapport entre l'épaisseur axiale de la barre au niveau de la jambe et l'épaisseur axiale de la barre au niveau de l'extrémité libre peut être compris entre 0,5 et 2, de préférence entre 0,7 et 1,4, avantageusement entre 0,9 est 1,1 ;
- selon l'invention la face extérieure de la jambe est concave et présente un point le plus extérieur et un point le moins extérieur par rapport à l'axe de révolution, une distance transversale, mesurée perpendiculairement à l'axe de révolution, entre le point le plus extérieur et le point le moins extérieur étant comprise entre 0,1 mm et 0,8 mm, et le rapport entre l'épaisseur transversale de la jambe et la distance transversale étant compris entre 8 et 15 ;
- le matériau du joint peut être choisi parmi les matériaux polymères, en particulier parmi l'AEM, l'EPDM, le FVMQ, le HNBR et le FKM.

L'invention se rapporte également à une utilisation d'un joint précédent dans un connecteur rapide comprenant une partie tubulaire mâle présentant un axe de révolution et une extrémité munie d'un bourrelet annulaire et une partie tubulaire femelle présentant un axe de révolution et une gorge annulaire destinée à recevoir au moins partiellement le bourrelet annulaire, la gorge annulaire étant prolongée par une butée annulaire destinée à bloquer axialement l'extrémité de la partie mâle, pour réduire les efforts d'emboîtement des embouts mâle et femelle

Selon des modes de réalisation préférés :
- la partie tubulaire mâle du connecteur rapide peut être conforme à la norme DIN 3021-3 ; et/ou
- le joint peut être disposé dans une gorge de l'embout femelle de sorte que la jambe du joint prenne appui contre un fond de la gorge et que la barre transversale s'étende transversalement vers l'axe de révolution de l'embout femelle.

L'invention se rapporte également à un connecteur rapide comprenant une partie tubulaire mâle présentant un axe de révolution et une extrémité munie d'un bourrelet annulaire et une partie tubulaire femelle présentant un axe de révolution et une gorge annulaire destinée à recevoir au moins partiellement le bourrelet annulaire, la gorge annulaire étant prolongée par une butée annulaire destinée à bloquer axialement l'extrémité de la partie mâle, caractérisé en ce qu'un joint précédent est inséré dans la gorge annulaire de la partie tubulaire femelle pour assurer un contact d'étanchéité périphérique par écrasement du joint entre les parties tubulaires mâle et femelle.

Selon des modes de réalisation préférés :
- la partie tubulaire mâle du connecteur rapide peut être conforme à la norme DIN 3021-3; et/ou
- le joint peut être disposé dans la gorge de l'embout femelle de sorte que la jambe du joint prenne appui contre un fond de la gorge et que la barre transversale s'étende transversalement vers l'axe de révolution de l'embout femelle.

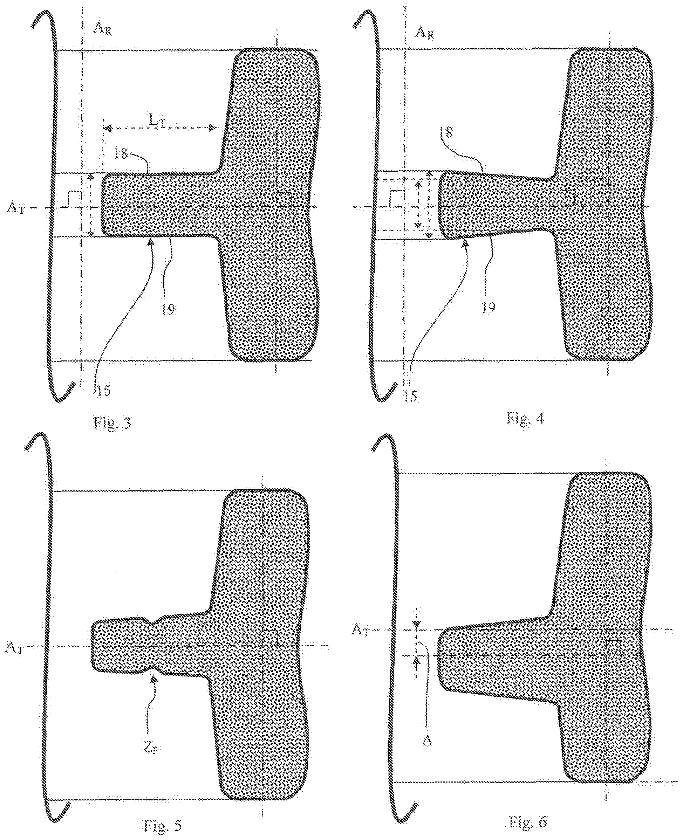

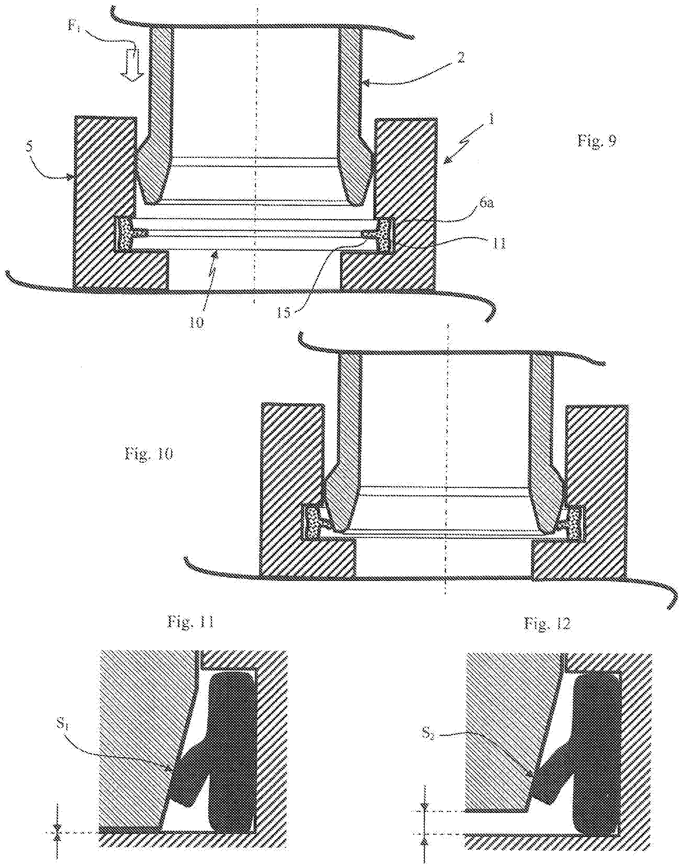

D'autres caractéristiques de l'invention ressortiront de la description détaillée ci-après faite en référence aux dessins annexés qui représentent, respectivement :
- en figure 1, une vue schématique en coupe partielle d'un connecteur rapide comprenant une partie mâle selon la norme DIN 3021-3;
- en figure 2, une vue schématique en coupe partielle d'un joint selon invention ;
- en figures 3 à 8, des modes de réalisations particulier d'un joint selon l'invention ;
- en figures 9 et 10, des vues schématiques en coupe partielle d'un joint selon l'invention monté « en alésage » dans un connecteur rapide comprenant une partie mâle selon la norme DIN 3021-3 avant emboîtement, après emboîtement ;
- en figures 11 et 12, des vues schématiques en coupe partielle d'un joint selon l'invention monté « en alésage » dans un connecteur rapide comprenant une partie mâle selon la norme DIN 3021-3 après un emboîtement avec une tolérance d'emboitement axiale respectivement de 0 mm et de 1,5 mm.

Le joint décrit par la suite doit être en un matériaux déformable élastiquement De préférence, le matériau du joint peut être choisi parmi les matériaux polymères, en particulier parmi l'AEM (copolymère d'éthylène et d'acrylate de méthyle), l'EPDM (terpolymère d'éthylène, de propylène ou d'un diène), le FVMQ (élastomère de fluorosilicone), le HNBR (copolymères butadiène-acrylonitrile hydrogénés, ou hydrogenated nitrile butadiene rubber en anglais), et le FKM (caoutchouc fluorocarboné).

En référence à la figure 2, un joint 10 selon l'invention présente un axe de révolution A_{R} et un axe transversal A_{T}. Il comprend, en section axiale longitudinale une forme générale en « T », et présente en position de repos :
- une jambe périphérique 11 s'étendant parallèlement par rapport à l'axe de révolution A_{R} et présentant une face intérieure 12, tournée vers l'axe de révolution A_{R}, une face extérieure périphérique 13 en vis-à-vis, et deux faces latérales 14 reliant les faces intérieure 12 et extérieure 13,
- une barre 15 sensiblement perpendiculaire à la jambe 11 s'étendant parallèlement à l'axe transversal A_{T}, depuis la face intérieure 12 de la jambe 11 vers l'axe de révolution A_{R}. Autrement dit, la barre 15 s'étend radialement vers l'intérieur du joint 10 en position de repos.

La barre 15 présente, en position d'utilisation, une extrémité libre 16, une face supérieure 18 et une face inférieure 19,

Par sensiblement perpendiculaire, on entend que l'axe principal de la barre est perpendiculaire, aux tolérances prés (plus ou moins 3°), à l'axe principal de la jambe périphérique. Les faces intérieure et extérieure de la jambe peuvent présenter un angle inférieur ou supérieur à 90° avec l'axe transversal, sans que cela ne change la perpendicularité de la jambe et de la barre. Ce qui importe, c'est que les deux faces intérieure et extérieure ne présentent pas un angle d'inclinaison de même signe par rapport à la parallèle à l'axe de révolution A_{R}.

Il en va de même pour la barre qui peut présenter une asymétrie tout en étant perpendiculaire à la jambe. Ce qui importe, c'est que les deux faces supérieure 18 et inférieure 19 ne présentent pas un angle d'inclinaison de même signe par rapport à la parallèle à l'axe transversal A_{T}.

La jambe 11 présente une longueur axiale L_{A,} mesurée entre les deux faces latérales 14 perpendiculairement à l'axe transversal A_{T,} cette longueur étant adaptée en fonction du jeu axial à compenser. Dans le domaine de l'automobile, cette longueur axiale est généralement comprise entre 4,5 et 9,5 mm. Puisque l'état de l'art pour les tolérances de jeu axial atteignables à un coût économique acceptable dans le domaine automobile sont de l'ordre de 1,50 mm-2 mm.

Avantageusement, la barre 15 s'étend transversalement au milieu de la longueur axiale L_{A} de la jambe 11, de telle sorte que le joint 10 est symétrique par rapport à l'axe transversal A_{T} et par rapport à l'axe de révolution A_{R}.

De cette manière, le joint selon l'invention est dépourvu de sens de montage, ce qui lui permet d'être très facilement installé, y compris automatiquement par des robots de montage.

Alternativement, comme illustré en figure 6, le joint peut être dissymétrique par rapport à l'axe transversal A_{T}, c'est-à-dire que la barre 15 s'étend transversalement à une distance inférieure de Δ à la moitié de la longueur axiale L_{A} de la jambe 11.

Un tel mode de réalisation peut être intéressant en cas de contraintes particulières d'encombrement ou de tolérances supérieures à 1,5 mm. En effet, il est ainsi possible de prévoir que la barre 15 s'étende plus haut (par référence à la figure 2) que le milieu de la jambe 11 de telle sorte qu'elle entre en contact avec la partie mâle du connecteur rapide à une distance supérieure de la butée 7.

La jambe 11 présente, en outre, une épaisseur transversale E_{T}, mesurée entre la face intérieure 12 et la face extérieure 13 perpendiculairement à l'axe de révolution A_{R}, avantageusement comprise entre 1 et 3 mm en fonction de la stabilité recherchée qui dépend, du taux de compression périphérique et des tolérances radiales et axiales que le joint est amené à compenser.

La barre 15 présente une longueur transversale L_{T} mesurée entre la face intérieure 12 de la jambe 11 et l'extrémité libre 16 de la barre perpendiculairement à l'axe transversal A_{T}, cette longueur étant adaptée en fonction des tolérances axiales et radiales à compenser. Dans le domaine de l'automobile, cette longueur transversale est généralement comprise entre 2,5 et 4,5 mm. Puisque l'état de l'art pour les tolérances de jeu axial atteignables à un coût économique acceptable dans le domaine automobile sont de l'ordre de 1,50 mm-2 mm.

Le rapport R1 = E_{T}/L_{T} entre l'épaisseur transversale E_{T} de la jambe 11 et la longueur transversale L_{T} de la barre 15 est de préférence compris entre 0,5 et 1, avantageusement entre 0,7 et 0,9.

Ce rapport permet une flexion de la barre 15 lors de l'insertion de la partie mâle 2 dans la partie femelle 5 du connecteur 1, tout en assurant une compression suffisamment forte de la barre 15 contre la partie mâle 2 pour assurer l'étanchéité dans un domaine de pression compris entre - 0,1 MPa et 2 MPa.

En outre, le rapport R2 = L_{A}/L_{T} entre la longueur axiale L_{A} de la jambe 11 et la longueur transversale L_{T} de la barre 15 est compris entre 2 et 3,5, avantageusement entre 2,5 et 3.

Ce rapport permet d'estimer le jeu axial admissible pour le connecteur.

De préférence, la barre 15 s'amincit axialement depuis la face intérieure 12 de la jambe 11 jusqu'à l'extrémité libre 16 de la barre 15, c'est-à-dire que la barre 15 présente une épaisseur axiale E_{A} qui diminue depuis la jambe 11 jusqu'à l'extrémité libre 16 de la barre 15.

Alternativement, la barre 15 peut être plus épaisse à l'extrémité 16 qu'au niveau de la jambe 11.

Cela permet d'adapter le design en fonction des exigences et donc d'ajuster la distribution des pressions de contact en fonction de la pression du fluide à étancher. Pour des pressions faibles (inférieures à 1 par) ou dépression, l'épaisseur E_{A} sera plus importante à l'extrémité 16 qu'à la base de la barre 15. Pour des pressions supérieures à 1 bar, l'épaisseur E_{A} pourra être plus faible à l'extrémité 16 qu'à la base de la barre 15.

Avantageusement, le rapport R3= E_{AJ}/E_{AE} entre l'épaisseur axiale E_{AJ} de la barre 15 au niveau de la jambe 11 et l'épaisseur axiale E_{AE} de la barre 15 au niveau de l'extrémité libre 16 est compris entre 0,5 et 2, de préférence entre 0,7 et 1,4, avantageusement entre 0,9 et 1,1. Les valeurs comprises entre 0,5 et 1 concernent le mode de réalisation de la figure 2, les valeurs comprises entre 1 et 2 concernent le mode de réalisation de la figure 6. et la valeur 1 concerne le mode de réalisation de la figure 5.

Ceci permet d'obtenir un compromis entre la rigidité de la barre 15 pour assurer une tenue à la mise en pression suffisante et la flexibilité de la barre 15 pour assurer que la barre 15 épouse " parfaitement le contour de la partie mâle du connecteur et compense de fait au mieux les rugosités/tolérances de forme du connecteur.

Selon l'invention, la face extérieure 13 de la jambe 11 est concave, c'est-à-dire qu'elle présente un creux. Autrement dit, la face extérieure 13 présente au moins un point le plus extérieur 13a (c'est-à-dire le plus éloigné) par rapport à l'axe de révolution A_{R}, et un point le moins extérieur 13b (c'est-à-dire le moins éloigné) par rapport à l'axe de révolution A_{R}.

La distance transversale d_{T}, mesurée perpendiculairement à l'axe de révolution A_{R}, entre le point le plus extérieur 13a et le point le moins extérieur 13b, représente la profondeur du creux. Selon l'invention, la distance transversale d_{T} est comprise entre 0,10 mm et 0,80 mm et le rapport R4 = E_{T/}d_{T} entre l'épaisseur transversale E_{T} de la jambe et la profondeur d_{T} du creux est compris entre 8 et 15.

Ceci permet de localiser une bavure de plan de joint dans le creux, ce qui évite que cette bavure soit en contact avec le fond 6a de la gorge 6, ce qui risquerait d'impacter l'étanchéité. L'objectif est également d'obtenir deux lignes d'étanchéité dissociées pour être moins dépendant des tolérances de formes et de la variabilité de la rugosité de la gorge et s'affranchir de l'impact de défaut d'aspect sur le joint. L'intérêt est également de permettre un taux de compression périphérique du joint plus élevé. Cela est important dans le cas d'une étanchéité à basse pression car le joint ne travaillant pas sur le principe de la compression de la matière, les contraintes transmises au diamètre extérieur du joint lors de l'emmanchement sont faibles. Il est donc important que le joint ait une compression périphérique intrinsèque importante. Le creux permet d'accepter des taux de compression périphérique plus élevés.

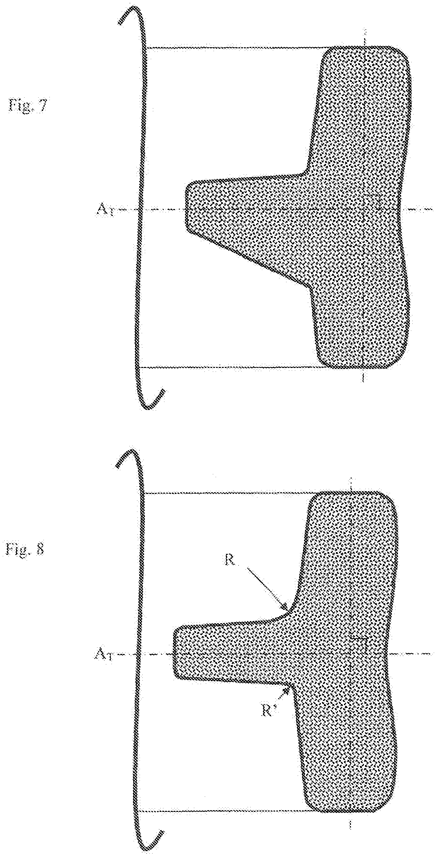

Selon d'autres modes de réalisation du joint selon l'invention illustrées aux figures 3 à 8 :
- l'épaisseur axiale de la barre 15 peut être constante (figure 3), augmentée (figure 4) ou se réduire (figures 2, 6, 7 et 8) de façon linéaire depuis la jambe jusqu'à l'extrémité libre 16 de la barre 15 ;
- alternativement, comme illustré en figure 5, l'épaisseur axiale de la barre 15 peut varier de façon non linéaire, de telle sorte que la barre présente une zone de flexion préférentielle Z_{F}, par exemple au milieu de la barre 15, présentant une épaisseur axiale vocalement inférieure à l'épaisseur axiale du reste de la barre.
- Le joint peut être dissymétrique par rapport à l'axe A_{T} si une flexion préférentielle est souhaitée dans un sens ou dans un autre ; dans ce cas le joint a un sens de montage et l'axe principal de la barre 15 est parallèle à l'axe transversal AT, mais décalé d'une distance Δ par rapport à lui (figure 6) ;
- Les angles entre la face 18 ou la face 19 d'une part et l'axe A_{T} d'autre part peuvent ne pas être égaux, le joint peut, à ce titre, être-dissymétrique par rapport à l'axe A_{T} (figure 7) ;
- l'angle entre la face 12 et l'axe A_{R} peut varier, et le joint peut, à ce titre, être dissymétrique par rapport à l'axe A_{T}.
- le rayon de raccordement (R et R' sur la figure 8) entre les faces 18 et 19 de la barre 15 et la face 12 peut varier, et le joint peut, à ce titre, être dissymétrique par rapport à l'axe A_{T} ;
- une utilisation du joint en montage piston est possible uniquement dans le cas d'une étanchéité en dépression ;
- la face extérieure 13 peut présenter un creux, mais peut également être plate.

L'invention réside également dans le fait d'utiliser un joint tel que décrit en relation avec la figure 2 dans un connecteur rapide 1 tel qu'illustré en figures 3 et 4, pour réduire les efforts d'emboîtement des embouts mâle et femelle.

Comme décrit précédemment, le connecteur 1 comprend une partie tubulaire mâle 2 présentant un axe de révolution A_{R} et une extrémité 3 munie d'un bourrelet annuaire 4. Il comprend également une partie tubulaire femelle 5 présentant un axe de révolution A_{R} (identique à celui de la partie mâle 2) et une gorge annulaire 6 destinée à recevoir au moins partiellement le bourrelet annulaire 4. La gorge annulaire est prolongée par une butée annulaire 7 destinée à bloquer axialement l'extrémité 3 de la partie mâle 2.

Avantageusement, le joint selon l'invention est utilisé dans un connecteur rapide conforme à la norme DIN 3021-3.

Comme illustré en figures 10 et 11, le joint 10 est disposé dans la gorge 6 de l'embout femelle de sorte que la jambe 11 du joint 10 prenne appui contre un fond 6a de la gorge 6 et que la barre transversale 15 s'étende transversalement vers l'axe de révolution A_{R} de l'embout femelle 5.

Le joint assure ainsi un contact d'étanchéité périphérique par déformation de la barre 15 du joint 10 entre les parties tubulaires mâle 2 et femelle 5.

Lorsque la partie tubulaire mâle 2 de raccord 1 est insérée dans la partie tubulaire femelle 5 selon le sens de la flèche F1, le bourrelet 4 de l'extrémité 3 entre en contact avec la barre 15 du joint 10 qui fléchit. La zone annulaire de contact entre la barre 15 et le bourrelet 4 de l'extrémité 3 assure l'étanchéité. Cette zone annulaire de contact est localisée sur la face supérieure 18 de la barre 15.

La géométrie du joint en T selon l'invention permet d'assurer l'étanchéité dans les domaines de pression de - 0,1 MPa à 2 MPa, même pour des tolérances d'emboîtement importantes. Des surpressions plus élevées sont envisageables dans une plage de tolérances limité.

Ainsi, comme le montre la figure 11, lorsque l'emboîtement est parfait (tolérance axiale égale à zéro millimètres), la barre 15 du joint est fléchie au maximum et la surface de contact S1 entre la barre et le bourrelet est maximale.

Lorsque l'emboîtement n'est pas parfait (tolérance axiale égale à 1,5 mm par exemple), comme illustré en figure 12, la géométrie du joint selon l'invention assure tout de même une surface de contact S2 suffisante entre le bourrelet et la barre 15 du joint 10 pour assurer l'étanchéité dans les domaines de pression requis.

En outre, les bavures du plan de joint, qui sont des défauts inévitables de fabrication, sont localisées transversalement à l'extrémité 16 de la barre 15 et sur la surface extérieure 13 de la jambe 11, avantageusement dans le creux 17.

Ainsi, les bavures du plan de joint sont localisées hors des zones fonctionnelles, du joint, et notamment, de la face supérieure 18 qui assure l'étanchéité.

## Revendications

1. Joint d'étanchéité annulaire (10) en matériau déformable élastiquement pour connecteur rapide (1) de conduites de fluide, présentant un axe de révolution (A_{R}) et un axe transversal (A_{T}), et comprenant, en section axiale longitudinale une forme générale en « T », présentant en position de repos :
- une jambe périphérique (11) s'étendant parallèlement par rapport à l'axe de révolution (A_{R}) et présentant :
• une face intérieure (12), tournée vers l'axe de révolution (A_{R}),
• une face extérieure périphérique (13) en vis-à-vis, concave et présentant un point le plus extérieur (13a) et un point le moins extérieur (13b) par rapport à l'axe de révolution (A_{R}),
• une épaisseur transversale (E_{T}), mesurée entre la face intérieure (12) et la face extérieure (13) perpendiculairement à l'axe de révolution (A_{R});
• deux faces latérales (14) reliant les faces intérieure (12) et extérieure (13), et
• une longueur axiale (L_{A}), mesurée entre les deux faces latérales (14) perpendiculairement à l'axe transversal (A_{T}),
- une barre (15) sensiblement perpendiculaire à la jambe (11) s'étendant parallèlement à l'axe transversal (A_{T}), depuis la face intérieure (12) de la jambe vers l'axe de révolution (A_{R}), ladite barre (15) présentant une longueur transversale (L_{T}) mesurée entre la jambe (11) et une extrémité libre (16) de la barre (15) perpendiculairement à l'axe transversal (A_{T}),
**caractérisé en ce qu'**une distance transversale (d_{T}), mesurée perpendiculairement à l'axe de révolution (A_{R}), entre le point le plus extérieur (13a) et le point le moins extérieur (13b) est comprise entre 0,1mm et 0,8 mm, et **en ce que** le rapport entre l'épaisseur transversale (E_{T}) de la jambe et la distance transversale (d_{T}) est compris entre 8 et 15.

2. Joint d'étanchéité selon la revendication 1, dans lequel la barre (15) s'étend transversalement au milieu de la longueur axiale de la jambe ou s'etend transversalement entre le milieu de la longueur axiale de la jambe et une face latérale (14).

3. Joint d'étanchéité selon l'une quelconque des revendications 1 ou 2, dans lequel le rapport entre l'épaisseur transversale (E_{T}) de la jambe (11) et la longueur transversale (L_{T}) de la barre (15) est compris entre 0,5 et 1, avantageusement entre 0,7 et 0,9.

4. Joint d'étanchéité selon les revendications 1 à 3, dans lequel le rapport entre la longueur axiale (L_{A}) de la jambe (11) et la longueur transversale (L_{T}) de la barre (15) est compris entre 2 et 3,5, avantageusement entre 2,5 et 3.

5. Joint d'étanchéité selon l'une quelconque des revendications 1 à 4, dans lequel la barre (15) présente une épaisseur axiale qui diminue linéairement depuis la jambe (11) jusqu'à l'extrémité libre (16) de la barre.

6. Joint d'étanchéité selon l'une quelconque des revendications 1 à 4, dans lequel la barre (15) présente une épaisseur axiale qui augmente linéairement depuis la jambe (11) jusqu'à l'extrémité libre (16) de la barre.

7. Joint d'étanchéité selon l'une quelconque des revendications 1 à 4, dans lequel la barre (15) présente une épaisseur axiale constante depuis la jambe (11) jusqu'à l'extrémité libre (16) de la barre.

8. Joint d'étanchéité selon l'une quelconque des revendications 5 à 7, dans lequel la barre (15) présente une zone de flexion préférentielle (Z_{F}) présentant une épaisseur axiale localement inférieure à l'épaisseur axiale du reste de la barre.

9. Joint d'étanchéité selon l'une quelconque des revendications 1 à 8, dans lequel la barre (15) est symétrique par rapport à l'axe transversal (A_{T}).

10. Joint d'étanchéité selon l'une quelconque des revendications 1 à 8, dans lequel la barre (15) est dissymétrique par rapport à l'axe transversal (A_{T}).

11. Joint d'étanchéité selon l'une des revendications 5 ou 6, dans lequel le rapport entre l'épaisseur axiale de la barre (15) au niveau de la jambe (E_{AJ}) et l'épaisseur axiale de la barre au niveau de l'extrémité libre (E_{AE}) est compris entre 0,5 et 2, de préférence entre 0,7 et 1,4, avantageusement entre 0,9 et 1,1.

12. Joint d'étanchéité selon l'une quelconque des revendications 1 à 11, dont le matériau est choisi parmi les matériaux polymères, en particulier parmi l'AEM, l'EPDM, le FVMQ, le HNBR et le FKM.

13. Utilisation d'un joint d'étanchéité (10) selon l'une quelconque des revendications 1 à 12 dans un connecteur rapide comprenant une partie tubulaire mâle (2) présentant un axe de révolution et une extrémité (3) munie d'un bourrelet annulaire (4) et une partie tubulaire femelle (5) présentant un axe de révolution et une gorge annulaire (6) destinée à recevoir au moins partiellement le bourrelet annulaire, la gorge annulaire étant prolongée par une butée annulaire (7) destinée à bloquer axialement l'extrémité de la partie mâle, pour réduire les efforts d'emboîtement des embouts mâle et femelle.

14. Utilisation selon la revendication 13, dans laquelle la partie tubulaire mâle (2) du connecteur rapide est conforme à la norme DIN 3021-3.

15. Utilisation selon l'une quelconque des revendications 13 ou 14, dans laquelle le joint (10) est disposé dans une gorge (6) de l'embout femelle (5) de sorte que la jambe (11) du joint prenne appui contre un fond de la gorge (6a) et que la barre transversale (15) s'étende transversalement vers l'axe de révolution de l'embout femelle.

16. Connecteur rapide (1), comprenant une partie tubulaire mâle (2) présentant un axe de révolution et une extrémité (3) munie d'un bourrelet annulaire (4) et une partie tubulaire femelle (5) présentant un axe de révolution et une gorge annulaire (6) destinée à recevoir au moins partiellement le bourrelet annulaire, la gorge annulaire étant prolongée par une butée annulaire (7) destinée à bloquer axialement l'extrémité de la partie mâle, **caractérisé en ce qu'**un joint (10) selon l'une quelconque des revendications 1 à 12 est inséré dans la gorge annulaire de la partie tubulaire femelle pour assurer un contact d'étanchéité périphérique par écrasement du joint entre les parties tubulaires mâle et femelle.

17. Connecteur rapide (1) selon la revendication 16, dans laquelle la partie tubulaire mâle (2) du connecteur rapide est conforme à la norme DIN 3021-3.

18. Connecteur rapide (1) selon l'une quelconque des revendications 16 ou 17, dans lequel le joint (10) est disposé dans la gorge (6) de l'embout femelle (5) de sorte que la jambe (11) du joint prenne appui contre un fond de la gorge (6a) et que la barre transversale (15) s'étende transversalement vers l'axe de révolution de l'embout femelle.

## Patentansprüche

1. Ringförmige Dichtung (10) aus elastisch verformbarem Material für Schnellkupplung (1) von Flüssigkeitsleitungen, die eine Rotationsachse (A_{R}) und eine Querachse (A_{T}) aufweist und im Längsachsschnitt eine allgemeine "T"-Form umfasst, die in Ruhestellung folgendes aufweist:
- ein Peripheriebein (11), das sich parallel zur Rotationsachse (A_{R}) erstreckt und Folgendes aufweist:
• eine Innenfläche (12), die zur Rotationsachse (A_{R}) gewandt ist,
• eine periphere Außenfläche (13) gegenüber, die konkav ist und einen äußersten Punkt (13a) und einen am wenigsten äußersten Punkt (13b) im Verhältnis zur Rotationsachse (A_{R}) aufweist,
• eine Querdicke (E_{T}), die zwischen der Innenfläche (12) und der Außenfläche (13) senkrecht zur Rotationsachse (A_{R}) gemessen wird;
• zwei Seitenflächen (14), die die Innen- (12) und die Außenfläche (13) verbinden, und
• eine Axiallänge (L_{A}), die zwischen den beiden Seitenflächen (14) senkrecht zur Querachse (A_{T}) gemessen wird,
- eine deutlich senkrecht zum Bein (11) stehende Stange (15), die sich parallel zur Querachse (A_{T}) erstreckt, und dies ab der Innenfläche (12) des Beins zur Rotationsachse (A_{R}), wobei die Stange (15) eine Querlänge (L_{T}) aufweist, die zwischen dem Bein (11) und einem freien Ende (16) der Stange (15) senkrecht zur Querachse (A_{T}) gemessen wird,
**dadurch gekennzeichnet, dass** ein Querabstand (d_{T}), der senkrecht zur Rotationsachse (A_{R}) zwischen dem äußersten Punkt (13a) und dem am wenigsten äußersten Punkt (13b) gemessen wird, bei zwischen 0,1 mm und 0,8 mm liegt, und dadurch, dass das Verhältnis zwischen der Querdicke (E_{T}) des Beins und dem Querabstand (d_{T}) bei zwischen 8 und 15 liegt.

2. Dichtung nach Anspruch 1, wobei sich die Stange (15) quer in der Mitte der Axiallänge des Beins erstreckt oder sich quer zwischen der Mitte der Axiallänge des Beins und einer Seitenfläche (14) erstreckt.

3. Dichtung nach einem der Ansprüche 1 oder 2, wobei das Verhältnis zwischen der Querdicke (E_{T}) des Beins (11) und der Querlänge (L_{T}) der Stange (15) bei zwischen 0,5 und 1 und vorteilhaft bei zwischen 0,7 und 0,9 liegt.

4. Dichtung nach einem der Ansprüche 1 bis 3, wobei das Verhältnis zwischen der Axiallänge (L_{A}) des Beins (11) und der Querlänge (L_{T}) der Stange (15) bei zwischen 2 und 3,5 und vorteilhaft bei zwischen 2,5 und 3 liegt.

5. Dichtung nach einem der Ansprüche 1 bis 4, wobei die Stange (15) eine Axialdicke aufweist, die ab dem Bein (11) bis zum freien Ende (16) der Stange linear abnimmt.

6. Dichtung nach einem der Ansprüche 1 bis 4, wobei die Stange (15) eine Axialdicke aufweist, die ab dem Bein (11) bis zum freien Ende (16) der Stange linear zunimmt.

7. Dichtung nach einem der Ansprüche 1 bis 4, wobei die Stange (15) eine konstante Axialdicke ab dem Bein (11) bis zum freien Ende (16) der Stange aufweist.

8. Dichtung nach einem der Ansprüche 5 bis 7, wobei die Stange (15) einen bevorzugten Biegebereich (Z_{F}) mit einer Axialdicke aufweist, die örtlich geringer als die Axialdicke der restlichen Stange ist.

9. Dichtung nach einem der Ansprüche 1 bis 8, wobei die Stange (15) gegenüber der Querachse (A_{T}) symmetrisch ist.

10. Dichtung nach einem der Ansprüche 1 bis 8, wobei die Stange (15) gegenüber der Querachse (A_{T}) asymmetrisch ist.

11. Dichtung nach einem der Ansprüche 5 oder 6, wobei das Verhältnis zwischen der Axialdicke der Stange (15) am Bein (E_{AJ}) und der Axialdicke der Stange am freien Ende (E_{AE}) bei zwischen 0,5 und 2, bevorzugt bei zwischen 0,7 und 1,4 und vorteilhaft bei zwischen 0,9 und 1,1 liegt.

12. Dichtung nach einem der Ansprüche 1 bis 11, deren Material unter den Polymeren und insbesondere unter den AEM, EPDM, FVMQ, HNBR und FKM gewählt wird.

13. Verwendung einer Dichtung (10) nach einem der Ansprüche 1 bis 12 in einer Schnellkupplung, die ein rohrförmiges Steckteil (2) umfasst, das eine Rotationsachse und ein mit einem ringförmigen Wulst (4) versehenes Ende (3) aufweist, und ein rohrförmiges Aufnahmeteil (5), das eine Rotationsachse und eine ringförmige Auskehlung (6) aufweist, die für die zumindest teilweise Aufnahme des ringförmigen Wulstes bestimmt ist, wobei die ringförmige Auskehlung durch einen ringförmigen Anschlag (7) verlängert ist, der dazu bestimmt ist, das Ende des Steckteils axial zu sperren, um die Einsteckkräfte des Steck- und des Aufnahmeteils zu reduzieren.

14. Verwendung nach Anspruch 13, wobei das rohrförmige Steckteil (2) der Schnellkupplung der Norm DIN 3021-3 entspricht.

15. Verwendung nach einem der Ansprüche 13 oder 14, wobei die Dichtung (10) so in einer Auskehlung (6) der Aufnahmemuffe (5) angeordnet ist, dass sich das Bein (11) der Dichtung an einem Boden der Auskehlung (6a) abstützt und die Querstange (15) sich quer zur Rotationsachse der Aufnahmemuffe erstreckt.

16. Schnellkupplung (1), die ein rohrförmiges Steckteil (2) umfasst, das eine Rotationsachse und ein mit einem ringförmigen Wulst (4) versehenes Ende (3) aufweist, und ein rohrförmiges Aufnahmeteil (5), das eine Rotationsachse und eine ringförmige Auskehlung (6) aufweist, die für die zumindest teilweise Aufnahme des ringförmigen Wulstes bestimmt ist, wobei die ringförmige Auskehlung durch einen ringförmigen Anschlag (7) verlängert ist, der dazu bestimmt ist, das Ende des Steckteils axial zu sperren, **dadurch gekennzeichnet, dass** eine Dichtung (10) nach einem der Ansprüche 1 bis 12 in die ringförmige Auskehlung des rohrförmigen Aufnahmeteils eingesetzt ist, um einen umlaufenden Dichtungskontakt durch Quetschung der Dichtung zwischen dem Steck- und dem Aufnahmeteil zu sichern.

17. Schnellkupplung (1) nach Anspruch 16, wobei das rohrförmige Steckteil (2) der Schnellkupplung der Norm DIN 3021-3 entspricht.

18. Schnellkupplung (1) nach einem der Ansprüche 16 oder 17, wobei die Dichtung (10) so in der Auskehlung (6) der Aufnahmemuffe (5) angeordnet ist, dass sich das Bein (11) der Dichtung an einem Boden der Auskehlung (6a) abstützt und die Querstange (15) sich quer zur Rotationsachse der Aufnahmemuffe erstreckt.

## Claims

1. An annular sealing gasket (10) made from an elastically deformable material for a quick connector (1) for fluid pipes, having an axis of revolution (A_{R}) and a transverse axis (A_{T}), and comprising, in a longitudinal axial section, a general "T" shape, having, in the idle position:
- a peripheral leg (11) extending parallel to the axis of revolution (A_{R}) and having:
• an inner face (12), turned toward the axis of revolution (A_{R}),
• a peripheral outer face (13) across from it, concave and having an outermost point (13a) and an innermost point (13b) relative to the axis of revolution (A_{R}),
• a transverse thickness (E_{T}), measured between the inner face (12) and the outer face (13) perpendicular to the axis of revolution (A_{R});
• two side faces (14) connecting the inner (12) and outer (13) faces, and
• an axial length (L_{A}), measured between the two side faces (14) perpendicular to the transverse axis (A_{T}),
- a bar (15) substantially perpendicular to the leg (11) extending parallel to the transverse axis (A_{T}), from the inner face (12) of the leg toward the axis of revolution (A_{R}), said bar (15) having a transverse length (L_{T}) measured between the leg (11) and a free end (16) of the bar (15) perpendicular to the transverse axis (A_{T}),
**characterized in that** a transverse distance (d_{T}), measured perpendicular to the axis of revolution (A_{R}), between the outermost point (13a) and the innermost point (13b) is comprised between 0.1 mm and 0.8 mm, and **in that** the ratio between the transverse thickness (E_{T}) of the leg and the transverse distance (d_{T}) is comprised between 8 and 15.

2. The sealing gasket according to claim 1, wherein the bar (15) extends transversely at the middle of the axial length of the leg or extends transversely between the middle of the axial length of the leg and a side face (14).

3. The sealing gasket according to any one of claims 1 or 2, wherein the ratio between the transverse thickness (E_{T}) of the leg (11) and the transverse length (L_{T}) of the bar (15) is comprised between 0.5 and 1, advantageously between 0.7 and 0.9.

4. The sealing gasket according to claims 1 to 3, wherein the ratio between the axial length (L_{A}) of the leg (11) and the transverse length (L_{T}) of the bar (15) is comprised between 2 and 3.5, advantageously between 2.5 and 3.

5. The sealing gasket according to any one of claims 1 to 4, wherein the bar (15) has an axial thickness that decreases linearly from the leg (11) to the free end (16) of the bar.

6. The sealing gasket according to any one of claims 1 to 4, wherein the bar (15) has an axial thickness that increases linearly from the leg (11) to the free end (16) of the bar.

7. The sealing gasket according to any one of claims 1 to 4, wherein the bar (15) has a constant axial thickness from the leg (11) to the free end (16) of the bar.

8. The sealing gasket according to any one of claims 5 to 7, wherein the bar (15) has a preferential flexing area (Z_{F}) having an axial thickness locally smaller than the axial thickness of the rest of the bar.

9. The sealing gasket according to any one of claims 1 to 8, wherein the bar (15) is symmetrical relative to the transverse axis (A_{T}).

10. The sealing gasket according to any one of claims 1 to 8, wherein the bar (15) is asymmetrical relative to the transverse axis (A_{T}).

11. The sealing gasket according to one of claims 5 or 6, wherein the ratio between the axial thickness of the bar (15) at the leg (E_{AJ}) and the axial thickness of the bar at the free end (E_{AE}) is comprised between 0.5 and 2, preferably between 0.7 and 1.4, advantageously between 0.9 and 1.1.

12. The sealing gasket according to any one of claims 1 to 11, wherein the material is chosen from among polymer materials, in particular AEM, EPDM, FVMQ, HNBR and FKM.

13. A use of a sealing gasket (10) according to any one of claims 1 to 12 in a quick connector comprising a male tubular part (2) having an axis of revolution and an end (3) provided with an annular bead (4) and a female tubular part (5) having an axis of revolution and annular groove (6) intended to at least partially receive the annular bead, the annular groove being extended by an annular stop (7) intended to block the end of the male part axially, to reduce the nesting forces of the male and female end-pieces.

14. The use according to claim 13, wherein the male tubular part (2) of the quick connector is according to standard DIN 3021-3.

15. The use according to any one of claims 13 or 14, wherein the gasket (10) is arranged in a groove (6) of the female end-piece (5) such that the leg (11) of the gasket bears against a bottom of the groove (6a) and the transverse bar (15) extends transversely toward the axis of revolution of the female end-piece.

16. A quick connector (1), comprising a male tubular part (2) having an axis of revolution and an end (3) provided with an annular bead (4) and a female tubular part (5) having an axis of revolution and an annular groove (6) intended to at least partially receive the annular bead, the annular groove being extended by an annular stop (7) intended to block the end of the male part axially, **characterized in that** a gasket (10) according to any one of claims 1 to 12 is inserted in the annular groove of the female tubular part to ensure sealed peripheral contact by crushing of the gasket between the male and female tubular parts.

17. The quick connector (1) according to claim 16, wherein the male tubular part (2) of the quick connector is according to standard DIN 3021-3.

18. The quick connector (1) according to any one of claims 16 or 17, wherein the gasket (10) is arranged in the groove (6) of the female end-piece (5) such that the leg (11) of the gasket bears against a bottom of the groove (6a) and the transverse bar (15) extends transversely toward the axis of revolution of the female end-piece.
